# EUROPÄISCHE PATENTSCHRIFT

(11) **EP 1 154 887 B1**
(45) Veröffentlichungstag und Bekanntmachung des Hinweises auf die Patenterteilung: **06.05.2004**
(21) Anmeldenummer: 00903613.8
(22) Anmeldetag: 22.01.2000
(51) Int. Cl.: B29C 43/22, A44B 18/00

(54) **VERFAHREN ZUR HERSTELLUNG VON HAFTVERSCHLUSSTEILEN AUS STRAHLENGEHÄRTETEN KUNSTSTOFFEN**
METHOD FOR PRODUCING FASTENER PARTS FROM RADIATION CURED PLASTIC MATERIALS
PROCEDE POUR LA PRODUCTION DE PARTIES D'ATTACHES ADHESIVES EN PLASTIQUES DURCIS PAR RADIATION

(30) Priorität: 15.02.1999 DE 19906008
(43) Veröffentlichungstag der Anmeldung: 21.11.2001
(73) Patentinhaber: Binder Kletten-Haftverschluss-Systeme GmbH, 01896 Pulsnitz (DE)
(72) Erfinder: POULAKIS, Konstantinos, D-71157 Hildrizhausen (DE)
(74) Vertreter: Mammel, Ulrike
(86) Internationale Anmeldenummer: PCT/EP2000/000486
(87) Internationale Veröffentlichungsnummer: WO 2000/048812

(56) Entgegenhaltungen:
- EP-A- 0 408 283
- US-A- 5 785 784
- PATENT ABSTRACTS OF JAPAN vol. 018, no. 272 (M-1610), 24. Mai 1994 (1994-05-24) & JP 06 047883 A (TOPPAN PRINTING CO LTD), 22. Februar 1994 (1994-02-22)

## Beschreibung

Die vorliegende Erfindung betrifft ein Verfahren zur Herstellung von Haftverschlußteilen, die eine Vielzahl von Verhakungsmitteln aufweisen.

Bekannte Haftverschlußteile werden aus thermoplastischen Polyolefinen mittels Extrusion hergestellt Hierbei wird der thermoplastische Kunststoff im plastischen oder flüssigen Zustand beispielsweise einem Spalt zwischen einer Druckwalze und einer Formwalze zugeführt, wobei die Formwalze eine Vielzahl von radial verlaufenden beidseitig offenen Ausnehmungen aufweist. Der thermoplastische Kunststoff dringt infolge des Linien-Quetschdrucks in die Ausnehmungen ein und härtet weitgehend aus, so daß die Haftverschlußteile als dreidimensionale Struktur von der Formwalze gelöst werden können. In dem Spalt zwischen der Form- und Druckwalze wird der Haftverschlußgrundkörper geformt, mit dem die Verhakungsmittel, nämlich die in den Ausnehmungen gebildeten Verhakungsschafte und die gebildeten Verhakungsköpfe, einstückig verbunden sind.

Vorzugsweise werden als Werkstoffe bei den herkömmlichen Verfahren thermoplastische Kunststoffe wie Polypropylen, Polyamid oder Polyethylen eingesetzt.

Ein solches Verfahren ist beispielsweise aus der WO 98/20767 bekannt.

Um eine ausreichende Versorgung der Ausnehmungen mit dem plastischen oder flüssigen Kunststoff zu erreichen, sind hohe Linien-Quetschdrücke von etwa 500 N/m bis einigen 1000 N/m erforderlich.

Auch lassen sich - bedingt durch die relativ geringe Abkühlungsgeschwindigkeit der thermoplastischen Polymere - auf einer ca. 400 mm breiten Formwalze nur geringe Meterzahlen der dreidimensionalen Haftverschlußfolie herstellen.

Die Herstellung von Haftverschlußteilen durch Extrusion thermoplastischer Kunststoffe erfordert durch die Erwärmung der thermoplastischen Masse auf bis zu 300° C einen erheblichen Energieaufwand.

Da sowohl die maximale Breite der Flächenhaftverschlußbahn als auch die Mindestdicke der Flächenhaftverschlüsse bei den bekannten Verfahren herstellungsbedingt begrenzt sind, hat die Firma Velcro Industrie B.V. zur Herstellung von breiteren und sehr dünnen folienartigen Flächenhaftverschlüssen Längs- und/oder Querreckverfahren entwickelt, die in der PCT WO 98/32349 beschrieben sind. Neben dem hohen kostenintensiven Herstellungsaufwand ist bei diesem Verfahren nachteilig, daß aufgrund des jeweiligen Reckverfahrens die Anzahl der Verhakungsmittel pro Flächeneinheit deutlich reduziert ist

Aus dem US-Patent 5,787,784 ist ein Verfahren zur Herstellung von Haftverschlußteilen bekannt, bei dem ein thermoplastisches Material in Form einer Vielzahl von Verhakungsmitteln gepreßt wird. Auch lehrt diese Druckschrift, daß die Haftverschlußteile aus Duroplasten hergestellt sein können.

Die Aufgabe der vorliegenden Erfindung besteht darin, ein neues Verfahren zur Herstellung von Haftverschlußteilen anzugeben, das bei vermindertem Energieaufwand eine Erhöhung der Herstellungsgeschwindigkeit ermöglicht. Weiterhin soll die vorliegende Erfindung die Bereitstellung von thermisch beständigeren Haftverschlußteilen ermöglichen sowie von Folienstrukturen mit äußerst geringer Dicke, wobei eine hohe Anzahl von hervorstehenden Elementen oder Verhakungsmitteln bereitgestellt wird.

Erstaunlicherweise wurde festgestellt, daß durch Verformen, Gießen und/oder Pressen einer strahlenvernetzbare, vorzugsweise acrylierte Prepolymere umfassenden Formulierung und anschließender Strahlenhärtung eine erhebliche Steigerung der Herstellungsgeschwindigkeit bei verminderten Energiekosten erreicht werden kann. Auch kann auf die Verwendung von Schutzgas bei geeigneter Auswahl der strahlenvemetzbaren Prepolymere verzichtet werden.

Bei der Strahlenhärtung von strahlenvemetzbare, insbesondere acrylierte Prepolymere umfassenden Formulierungen, die mittels UV- oder Elektronenbestrahlung erfolgt, werden außerordentlich hohe Polymerisationsgeschwindigkeiten erreicht.

Im Vergleich zu den bekannten Herstellungsverfahren von Haftverschlußteilen aus thermoplastischen Kunststoffen kann durch das erfindungsgemäße Verfahren die Walzenumdrehungsgeschwindigkeit und damit die pro Zeiteinheit hergestellte Länge der dreidimensionalen Bahnen verzehnfacht werden.

Da die Polymerisation mittels Strahlenvernetzung keine Erwärmung der härtbaren Masse wie bei den bekannten Verfahren erfordert, ist das erfindungsgemäße Verfahren auch energiesparend.

Die Strahlenhärtung bietet weiterhin den Vorteil, daß die Polymerisation ohne Freisetzung von Spaltprodukten erfolgt. Die strahlenvernetzbaren, insbesondere acrylierten Prepolymere werden vielmehr nahezu quantitativ untereinander und gegebenenfalls auch mit vorhandenen Reaktivlösungsmitteln vemetzt.

Durch die Verwendung strahlenvernetzbarer, insbesondere acrylierter Prepolymere können thermisch beständige Haftverschlußteile hergestellt werden, die beispielsweise auch als Haftverschlußteile für Schleifscheiben oder sonstige Arbeitsgeräte einsetzbar sind. Eine besonders hohe thermische Beständigkeit weisen die stark vemetzten acrylierten Polymere auf, die durch Strahlenhärtung von Formulierungen hergestellt werden, die Vernetzungsstellen fördernde bi- und/oder trifunktionelle Prepolymere und/oder Monomere umfassen. Diese Polymere, die im Gegensatz zu den bekannten Polyolefinen, Polyamiden und Polyestern auch bei Temperaturen von größer 300° C eingesetzt werden können, sind im wesentlichen Duroplaste.

Durch die geeignete Auswahl der jeweiligen strahlenvemetzbaren Prepolymere und gegebenenfalls auch Monomere können auch Polymere mit eher thermoplastischen Eigenschaften hergestellt werden, indem der Anteil an monofunktionellen Prepolymeren und gegebenenfalls Monomeren erhöht wird.

Die Eigenschaften der Polymere hängen selbstverständlich auch von der Kettenlänge und dem Vemetzungsgrad der eingesetzten Prepolymere ab.

Als strahlenvemetzbare, insbesondere acrylierte Prepolymere können beispielsweise Polyesteracrylate, Epoxyacrylate, Polyetheracrylate, Silikonacrylate oder Urethanacrylate eingesetzt werden.

Bevorzugt ist die Verwendung von Urethanacrylaten, da diese ohne Schutzgas strahlenvernetzbar sind. Bevorzugte Urethanacrylate sind die aliphatischen mono-, bi- oder trifunktionellen Urethanacrylate, wobei die aliphatischen Gruppen zur Flexibilität des Kunststoffes beitragen. Bevorzugt werden bifunktionelle aliphatische Urethanacrylate eingesetzt. Prinzipiell ist es ebenfalls möglich, wenigstens teilweise aromatische Urethanacrylate verschiedener Funktionalität einzusetzen. Bevorzugt sollte die Viskosität der eingesetzten Prepolymere zwischen 3.000 und 60.000 mPa s betragen.

Darüber hinaus können auch andere strahlenvernetzbare Prepolymere in der Formulierung verwendet werden. Unter Schutz- und/oder Inertgas können auch folgende Prepolymere eingesetzt werden:
1. Polyesterharze oder chlorierte Polyesterharze, oder
2. unter Ausnutzung eines kationischen Vemetzungsmechanismus
   a) cycloaliphatische Epoxidharze oder
   b) Epoxi-polyol-blends.

Bei der Verwendung von strahlenvernetzbaren, insbesondere acrylierten Prepolymeren ist es infolge der relativ hohen Viskosität meist erforderlich, die Formulierung durch Zusatz von Reaktivverdünnern, insbesondere Monomeren, auf die geeignete Viskosität zu verdünnen. Durch die geeignete Wahl der zugesetzten Monomere kann die Härte, der Vemetzungsgrad und die Flexibilität des polymeren Endproduktes sowie die Viskosität der Ausgangsformulierung eingestellt werden.

Bei der Polymerisation werden die Monomere in das Netzwerk eingebaut, so daß das Polymer nahezu keine Lösungsmittel freisetzt.

Vorzugsweise werden bei der Verwendung acrylierter Prepolymere als monomere Reaktivverdünner Acrylate eingesetzt, die über eine vielfältige Funktionalität verfügen.

Durch den Zusatz monofunktioneller Acrylate werden Verringerung der Härte, Erhöhung der Flexibilität und gute Adhäsionseigenschaften des Polymers erreicht. Auch bewirken monofunktionelle Monomere eine geringere Schrumpfung bei der Polymerisation. Prinzipiell können alle bekannten monofunktionellen Acrylate eingesetzt werden. Vorzugsweise werden die monofunktionellen Acrylate aus der aus Butylacrylat, 2-Ethylhexylacrylat, Hydroxyethylacrylat, Hydroxypropylacrylat, 4-Hydroxybutylacrylat, Ethyldiglykolacrylat, Isodecylacrylat und 2-Ethoxyethylacrylat bestehenden Gruppe ausgewählt, wobei Ethoxyethylacrylat und Isodecylacrylat besonders bevorzugt sind.

Auch der Zusatz von bi- oder trifunktionellen Acrylaten bewirkt die Einstellung der gewünschten Eigenschaften wie Härte und Flexibilität. Als bifunktionelle Monomere werden vorzugsweise Diethylenglykoldiacrylat, Dipropylenglykoldiacrylat, Triethylenglykoldiacrylat, Tripropylenglykoldiacrylat oder 1,6-Hexandioldiacrylat verwendet, wobei 1,6-Hexandioldiacrylat besonders bevorzugt ist.

Falls gewünscht, können auch trifunktionelle Acrylate wie Trimethylolpropantriacrylat oder Pentaerythrittriacrylat oder auch höherfunktionelle Acrylate eingesetzt werden.

Es ist ebenfalls möglich, propoxilierte Monomere einzusetzen, die sich durch eine geringere Hautreizwirkung auszeichnen.

Vorzugsweise wird ein Monomerengemisch aus mono- und bifunktionellen Acrylaten eingesetzt, insbesondere ein Gemisch aus 2-Ethoxyethylacrylat und 1,6 Hexandioldiacrylat. Die jeweiligen Konzentrationen der zugesetzten Monomere zu der Formulierung hängen von der erforderlichen Viskosität der Formulierung und der gewünschten Härte, Flexibilität, den Adhäsionseigenschaften des Polymers, der Reaktionsgeschwindigkeit etc. ab.

Ein Gemisch aus mono- und bifunktionellen Acrylaten, insbesondere Ethoxyethylacrylat oder Isodecylacrylat mit Trimethylolpropantriacrylat, hat sich ebenfalls bewährt.

Ein weiterer Vorteil der Herstellung der Haftverschlußteile aus strahlenvernetzbaren Prepolymeren und Monomeren besteht darin, daß sich durch die Wahl der eingesetzten Monomere die Adhäsionseigenschaften des Kunststoffs steuern lassen und daß ohne die bei den bekannten Thermoplasten erforderlichen zusätzlichen Oberflächenbehandlungsschritte durch Corona-Entladung, Gasflammbehandlung oder Fluorierung eine hinreichende Haftung des Kunststoffs auf einem gewünschten Träger erzielt werden kann. Somit kann bei dem erfindungsgemäßen Verfahren ein Arbeitsschritt eingespart werden.

Um eine hinreichende Polymerisation zu erreichen, ist es erforderlich, bei Einsatz von UV-härtbaren Formulierungen einen Photoinitiator zuzusetzen, der bei Anregung durch UV-Strahlung die die Kettenreaktion startenden Primärradikale bildet.

Als Photoinitiatoren können prinzipiell sämtliche bekannten, bei UV-Absorption Radikale freisetzenden Moleküle eingesetzt werden, wie beispielsweise α-Hydroxyketon, α-Aminoketone, Benzildimethylketale, Bis-benzoylphenylphoshinoxide, Metallocene und deren Derivate.

Besonders bevorzugt ist, einen 2-Hydroxy-2-methyl-1-phenyl-propan-1-on enthaltenden Photoinitiator, beispielsweise Darocur 1173 der Firma Ciba Geigy, zu verwenden.

Der Formulierung können selbstverständlich weitere übliche Zusätze wie zum Beispiel Farbstoffe, Stabilisatoren, Sauerstoff-Fänger, Ferritpulver zugesetzt werden.

Die Viskosität der strahlenvemetzbaren Formulierung ist von den speziellen Herstellungsbedingungen, zum Beispiel dem Linien-Quetschdruck zwischen den Formwalzen, abhängig. Vorzugsweise sollte die Viskosität der Formulierung zwischen 150 und 20.000 mPa s betragen, besonders bevorzugt sind Viskositäten zwischen 300 und 5.000 mPa s.

Der Prozentsatz der der strahlenhärtbaren Formulierung zugesetzten Prepolymere hängt von der erforderlichen Viskosität der Formulierung, den Eigenschaften der Prepolymere und Monomere und den gewünschten Eigenschaften des herzustellenden Kunststoffmaterials ab. Im allgemeinen beträgt der Anteil an Prepolymeren in der Formulierung etwa 60 bis 95 %, vorzugsweise etwa 80 %.

Die erfindungsgemäß hergestellten Haftverschlußteile können in vielfältiger Weise eingesetzt werden: im Babywindelbereich oder für Inkontinenzwindeln, als temperaturbeständige Haftverschlußteile zur Befestigung von Schleifscheiben oder sonstiger Werkzeuge, zur großflächigen Befestigung von Teppichen, Wandbehängen, für Sitzbezüge und Sitzelemente, Verpackungen oder Fliegengitter sowie für selbstreinigende Oberflächen.

Die Dicke des Haftverschluß-Grundkörpers und die Anzahl der Verhakungsmittel pro cm² richten sich nach der Verwendung der fertigen Haftverschlußteile.

Neben Haftverschlußteilen können mit dem erfindungsgemäßen Verfahren auch andere Folien, die wenigstens einseitig hervorstehende Elemente oder Rippen umfassen, wie zum Beispiel Riblet-Folien, hergestellt werden. Riblet-Folien weisen auf einer Seite eine Vielzahl solcher hervorstehender Elemente auf; die eine Verminderung der Wandscherbeanspruchung und/oder eine Kontrolle der Grenzschichtablösung bewirken. Die hervorstehenden Elemente können entsprechend den gewünschten Effekten der Oberflächenstruktur in der Art einer Haifischhaut oder einer Lotus-Blüte geformt sein, die eine Verminderung des Strömungswiderstand bewirken und/oder selbstreinigend sind. Solche Oberflächenstrukturen sind beispielsweise in "Biological Surfaces and their Technological Application - Laboratory and Flight Experiments on Drag Reduction and Separation Control" von D. W. Bechert, M. Bruse, W. Hage und R. Meyer in "Fluid Mech. (1997) Vol. 338, pp. 59 - 87 Cambridge University Press" beschrieben.

Die Herstellung solcher Riblet-Folien erfolgt ebenfalls mittels der strahlenvernetzbare, insbesondere acrylierte Prepolymere umfassenden Formulierungen, wobei diese ebenfalls zwischen einer Formwalze und einer Gegendruckwalze entsprechend geformt und dann strahlengehärtet werden, wobei die Formwalze eine Vielzahl von der Riblet-Struktur komplementären Ausnehmungen aufweist. Die aus strahlenhärtbaren Formulierungen herstellbaren Riblet-Folien zeichnen sich ebenfalls durch eine hohe Herstellungsgeschwindigkeit und eine außerordentlich große Temperaturbeständigkeit aus. Die Riblet-Folien werden beispielsweise zur Herabsetzung des Strömungswiderstandes bei Flugzeugen und Bahnen oder in Pipelines, zur Verhinderung der Eisbildung bei Flugzeugen oder als selbstreinigende Folie eingesetzt.

Die Erfindung wird nun anhand von Ausführungsbeispielen beschrieben.

### Strahlenhärtbare Formulierungen zur Herstellung von Haftverschlußteilen

*A. UV-härtbare Formulierungen*
   1. 77,7 Gew.% Ebecryl 4835⁽¹⁾ der Firma UCB Chemicals, Drogenbos, Belgien,
      9,7 Gew.% IRR 184⁽²⁾ (Ethoxyethylacrylat) der Firma UCB Chemicals
      9,7 Gew.% HDDA⁽³⁾ (Hexandioldiacrylat) der Firma UCB Chemicals
      2,9 Gew.% Darocur 1173⁽⁴⁾ (Photoinitiator, 2-Hydroxy-2-methyl-1-phenylpropan-1-on) der Firma Ciba Geigy
      Die Viskosität dieser Formulierung beträgt circa 300 mPa s.
   2. 77.7 Gew.% Ebecryl⁽¹⁾ 4835 der Firma UCB Chemicals
      9,7 Gew.% IRR 184⁽²⁾ der Firma UCB Chemicals
      9,7 Gew.% TMPTA⁽⁵⁾ (Trimethylolpropantriacrylat) der Firma UCB Chemicals
      2.9 Gew.% Darocur 1173⁽⁴⁾ der Firma Ciba Geigy als Photoinitiator
   3. Anstelle von 9,7 Gew.% IRR 184 der Firma UCB Chemicals können in den Rezepturen 1 und 2 auch 9,7 Gew.% Isodecylacrylat der Fa. UCB Chemicals eingesetzt werden.
*B. Elektronenstrahlhärtbare Formulierung*
   1. 80 Gew.% Ebecryl 4835 der Fa. UCB Chemicals
      10 Gew.% IRR 184 der Firma UCB Chemicals
      10 Gew.% HDDA (Hexandioldiacrylat) der Fa. UCB Chemicals
   2. Anstelle von 10 Gew.% IRR 184 der Fa. UCB Chemicals werden 10 Gew.% Isodecylacrylat und/oder anstelle von 10 Gew.% HDDA 10 Gew.% TMPTA⁽⁵⁾ eingesetzt.
      (1) Ebecryl 4835 ist nach Herstellerangaben ein Gemisch aliphatischer Urethandiacrylate verdünnt mit 10 % Tetraethylenglykolacrylat. Die Viskosität beträgt bei 25 ° C etwa 4.500 mPa s. Das Molekulargewicht beträgt circa 1.600 g/mol.
      (2) IRR 184 ist ein 2-(2-Ethoxyethoxy)ethylacrylat. Die Viskosität beträgt nach Herstellerangabe bei 25° C etwa 2,5 bis 9 mPa s.
      (3) Die Viskosität des HDDA beträgt laut Herstellerangaben 10 mPa s.
      (4) Darocur 1173 weist nach Herstellerangaben im Bereich zwischen 240 und 400 nm sich überlagernde Absorptionsbanden auf.
      (5) Die Viskosität des Trimethylolpropantriacrylats beträgt laut Herstellerangaben 115 mPa s.

Nachfolgend werden zwei verschiedene Vorrichtungen zur Herstellung von Haftverschlußteilen beschrieben.

Es zeigt
- Figur 1: eine Vorrichtung zur Herstellung von Haftverschlußteilen auf einem Trägermaterial mittels UV-Härtung
- Figur 2: eine Vorrichtung zur Herstellung von Haftverschlußteilen ohne zusätzliches Trägermaterial mittels UV-Härtung.
- Figur 3: eine Seitenansicht eines Ausschnitts aus einem Haftverschlußteil 26 auf einem Träger 13.

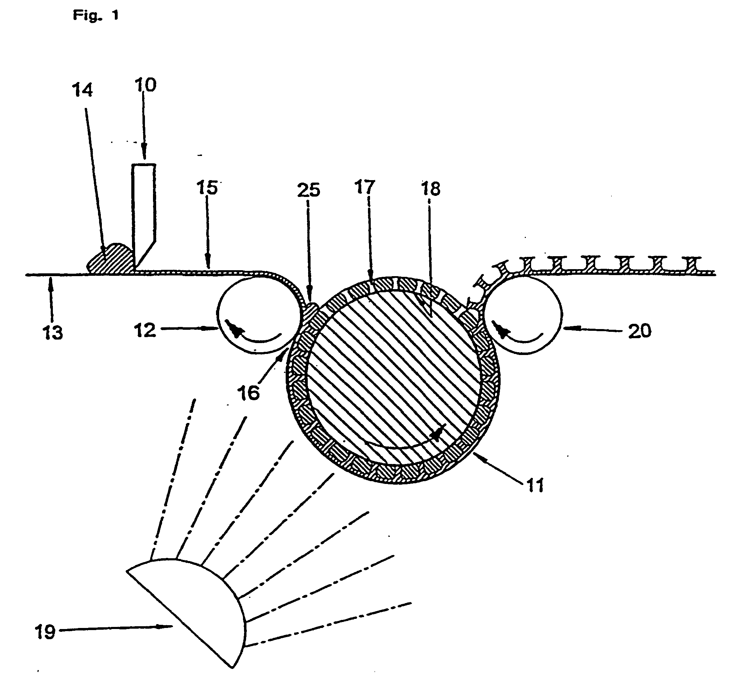

Bei der in Figur 1 gezeigten Vorrichtung wird die zu polymerisierende strahlenvernetzbare, insbesondere acrylierte Prepolymere umfassende Formulierung 14 gemäß Rezeptur A1, A2 oder A3 als ein Film 15 konstanter Schichtdicke zwischen d = 12 µm und 50 µm, vorzugsweise 22+/- 5 µm, auf ein Trägermaterial 13 aufgebracht, beispielsweise durch Rakel- 10 oder Düsenauftrag.

Als Trägermaterial 13 kann eine Folie aus Kunststoff, z. B. aus Hostaphan, ein Vlies, ein textiles Material oder jedes andere geeignete Trägermaterial eingesetzt werden.

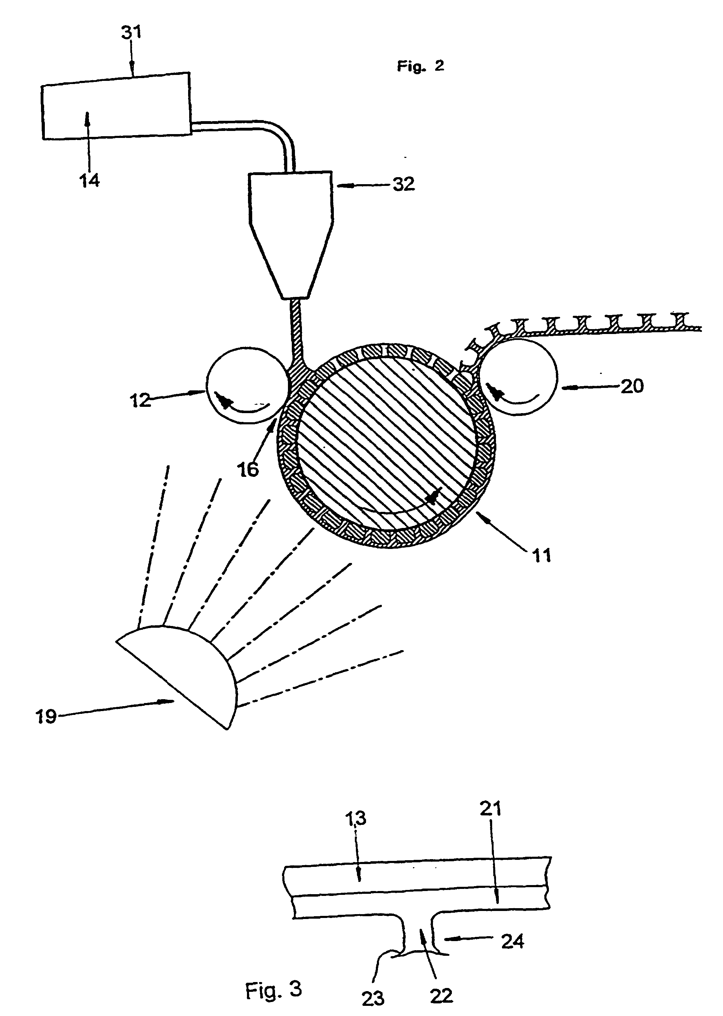

Der Film 15 aus der zu polymerisierenden Formulierung auf dem Trägermaterial 13 wird anschließend einem Spalt 16 zwischen einer Formwalze 11 und einer Gegendruckwalze 12 zugeführt. Die Formwalze 11 weist eine Vielzahl von radial verlaufenden beidseitig offenen Ausnehmungen 17 auf. Die viskose Formulierung wird durch den Spalt 16 in Form eines Haftverschlußgrundkörpers 21 und in den Ausnehmungen in die Form der Verhakungsstege 22 und Verhakungsköpfe 23 umfassenden Verhakungsmittel 24 (vergleiche auch Figur 3) gepreßt und anschließend durch Bestrahlung mittels UV-Licht 19 geeigneter Wellenlänge bestrahlt. Die Verhakungsmittel können verschiedenartig geformt sein, beispielsweise eine runde, drei-, vier-, fünf- oder sechseckige Querschnittsfläche aufweisen. Auch die Verhakungsköpfe 23 können unterschiedlich geformt sein, beispielsweise tellerförmig, pitzförmig, gekrümmt oder hakenförmig. Dahingehende Ausgestaltungen sind in der nachveröffentlichten DE 198 28 856.5 beschrieben.

Durch die Absorption des UV-Lichts setzt der UV-empfindliche Photoinitiator Radikale frei, die die Radikalkettenpolymerisation starten.

Die Reaktionsgeschwindigkeit der Polymerisationsreaktion ist außerordentlich hoch, so daß die aus dem Haftverschlußgrundkörper 21 und den Verhakungsmitteln 24 bestehenden Haftverschlußteile 26 auf dem Trägermaterial 13 von der Formwalze 11 in einem Bruchteil der herkömmlichen Aushärtungszeit mittels der Abzugswalze 20 gelöst werden können. Pro Minute können ca. 20 bis 30 m Haftverschlußfolie hergestellt werden. Da gegenüber den bekannten Verfahren geringere Linien-Quetschdrücke erforderlich sind, kann die Vorrichtung bei gleichbleibender Genauigkeit breitere Walzen 11, 12, 20 aufweisen.

Durch den Linien-Quetschdruck zwischen den Walzen 11 und 12 und die UV-Bestrahlung wird ebenfalls eine feste Verbindung zwischen dem Trägermaterial 13 und dem Haftverschlußgrundkörper 21 erreicht.

Um eine vollständige Versorgung der in der Formwalze 11 vorgesehenen Ausnehmungen 17 zu erreichen, wird die Formulierung in einem geringen Überschuß zugegeben, so daß durch den Wulst 25 aus strahlenvernetzbarer Masse 14 immer genügend Ausgangsmaterial zur Versorgung der Ausnehmungen 17 in der Formwalze 11 zur Verfügung steht.

Die Gegendruckwalze 12 und die Walze 20 weisen eine der Drehrichtung der Formwalze 11 entgegengesetzte Drehrichtung auf.

Als UV-Quelle 19 kann ein Quecksilber-Mitteldruckstrahler verwendet werden. Es sind jedoch auch andere UV-Strahlungsquellen möglich. In Abhängigkeit von der die Radikalbildung bewirkenden Absorptionsbande des Photoinitiators wird mit UV-Licht im Wellenlängenbereich zwischen 180 und 400 nm entsprechend circa 3 bis 6 eV bestrahlt.

Die Bestrahlungswellenlänge richtet sich nach dem Emissionsspektrum der verwendeten UV-Strahlungsquelle und nach dem Absorptionsband der Photoinitiatoren.

Das verwendete Trägermaterial 13 sollte selbstverständlich gegenüber der UV-Strahlung weitgehend beständig sein. Darüber hinaus muß trotz der durch das Trägermaterial bewirkten Filterung und Streuung der UV-Strahlung sichergestellt sein, daß in der zu härtenden Schicht genügend die Kettenreaktion in Gang setzende photochemische erzeugte Primärradikale gebildet werden.

Die in Figur 2 gezeigte Vorrichtung dient im Unterschied zu der in Fig. 1 ausführlich beschriebenen Vorrichtung zur Herstellung von Haftverschlußteilen ohne zusätzliches Trägermaterial. Die strahlenvemetzbare Formulierung 14 befindet sich in einem Vorratsbehälter 31 und wird über eine Düse 32 dem Spalt 16 zwischen der Formwalze 11 und der Gegendruckwalze 12 zugegeben, wobei die Zugabe wie bei der in Figur 1 beschriebenen Vorrichtung in einem geringen Überschuß erfolgt.

Durch die hohe Viskosität der strahlenvemetzbaren Formulierung bleibt die durch den Anpreßdruck bewirkte Verformung der viskosen Masse aufrechterhalten, bis eine weitgehende Aushärtung durch die Bestrahlung erfolgt ist und die Haftverschlußteile mittels der Abzugswalze 20 von der Formwalze 11 gelöst werden.

Bei Einsatz von acrylierten Urethanen als Prepolymeren ist es nicht es nicht erforderlich, unter Schutzgas zu arbeiten. Um einen im wesentlichen durch Sauerstoff bewirkten vorzeitigen Kettenabbruch bei Verwendung anderer strahlenhärtbarer Prepolymere zu vermeiden, sollte die Reaktion unter Schutzgas durchgeführt werden.

Bei einer Vorrichtung zur Herstellung von Haftverschlußteilen durch Elektronenstrahlenhärtung wird anstelle der UV-Quelle 19 in den in Figur 1 und 2 beschriebenen Vorrichtungen eine Elektronenstrahlungsquelle eingesetzt und beispielsweise eine der Formulierungen B1 oder B2 als strahlenvernetzbare Masse verwendet.

Der Energiebereich der Elektronenstrahlung liegt üblicherweise zwischen 150 und 300 keV.

Die Herstellung der Haftverschlußteile aus strahlenvemetzbaren, insbesondere acrylierten Prepolymeren kann auch in anderen kontinuierlich oder diskontinuierlich arbeitenden Vorrichtungen erfolgen, die Mittel zum Verformen, Gießen und/oder Pressen von strahlenvernetzbare, insbesondere acrylierte Prepolymere umfassenden Formulierungen in Form eines Haftverschlußgrundkörpers mit daran angeordneten Verhakungsmitteln aufweisen und die eine UV- oder einen Elektronenstrahlungsquelle zur Strahlenhärtung umfassen.

## Patentansprüche

1. Verfahren zur Herstellung von Haftverschlußteilen mit einer Vielzahl von Verhakungsmitteln (24), **dadurch gekennzeichnet, daß** eine strahlenvernetzbare Prepolymere umfassende Formulierung in Form einer Vielzahl von Verhakungsmitteln (24) zusammen mit einem Haftverschluß-Grundkörper (21) geformt, gegossen und/oder gepreßt und anschließend strahlengehärtet wird.

2. Verfahren nach Anspruch 1, **dadurch gekennzeichnet, daß** die strahlenvernetzbaren, insbesondere acrylierten Prepolymere aus der aus Polyesteracrylaten, Epoxyacrylaten, Polyetheracrylaten, Silikonacrylaten oder Urethanacrylaten bestehenden Gruppe ausgewählt werden, wobei die Urethanacrylate vorzugsweise aliphatische mono-, bi- oder trifunktionelle Urethanacrylate sind.

3. Verfahren nach einem der Ansprüche 1 oder 2, **dadurch gekennzeichnet, daß** die Formulierung Reaktivverdünner, vorzugsweise Monomere, besonders bevorzugt Acrylate, umfaßt, wobei die Acrylate vorzugsweise monofunktionelle Acrylate aus der aus Butylacrylat, 2-Ethylhexylacrylat, Hydroxyethylacrylat, Hydroxypropylacryrat, 4-Hydroxybutylacrylat, Ethyldiglykolacrylat, Isodecylacrylat und 2-Ethoxyethylacrylat bestehenden Gruppe, die bifunktionellen Acrylate aus der aus Diethylenglykoldiacrylat, Dipropylenglykoldiacrylat, Triethylenglykoldiacrylat. Tripropylenglykoldiacrylat und 1,6-Hexandioldiacrylat und die trifunktionellen Acrylate aus der aus Trimethylolpropantriacrylat oder Pentaerythrittriacrylat bestehenden Gruppe sind und 2-Ethoxyethylacrylat, Isodecylacrylat, 1,6-Hexandioldiacrylat und Trimethylolpropantriacrylat besonders bevorzugt sind.

4. Verfahren nach einem der Ansprüche 1 bis 3, **dadurch gekennzeichnet, daß** die Strahlenhärtung mittels Elektronenstrahlung erfolgt.

5. Verfahren nach einem der Ansprüche 1 bis 3, **dadurch gekennzeichnet, daß** die Strahlenhärtung mittels UV-Strahlen erfolgt und die Formulierung vorzugsweise zusätzlich wenigstens einen Photoinitiator umfaßt

6. Verfahren nach Anspruch 5 , **dadurch gekennzeichnet, daß** der Photoinitiator aus der aus α-Hydroxyketonen, α-Aminoketonen, Benzildimethylketalen, Bisbenzoyl-phenylphoshinoxiden, Metallocenen und deren Derivaten bestehenden Gruppe ausgewählt wird und vorzugsweise 2-Hydroxy-2-methyl-1-phenylpropan-1-on ist.

7. Verfahren nach einem der Ansprüche 1 bis 6, **dadurch gekennzeichnet, daß** das Formen, Gießen oder Pressen in einem Spalt (16) zwischen einer Formwalze (11) und einer Gegendruckwalze (12) erfolgt und die Formwalze (11) eine V ielzahl von radial verlaufenden A usnehmungen (17) aufweist, wobei bei Passieren des Spaltes (16) die Verhakungsmittel (24) bzw. die hervorstehenden Elemente gebildet werden.

8. Verfahren nach Anspruch 7, **dadurch gekennzeichnet, daß** die Viskosität der Formulierung bei 25° C zwischen 150 und 20.000 mPa s, vorzugsweise zwischen 300 und 5.000 mPa s, beträgt.

## Claims

1. A process for producing cling-fastener parts with a large number of interlocking means (24), **characterized in that** a formulation encompassing radiation-crosslinkable prepolymers is molded, cast, and/or compression molded into the shape of a large number of interlocking means (24) together with a cling-fastener base (21), and is then radiation-cured.

2. The process as claimed in claim 1, **characterized in that** the radiation-crosslinkable, in particular acrylic, prepolymers are selected from the group consisting of polyester acrylates, epoxy acrylates, polyether acrylates, silicone acrylates and urethane acrylates, the urethane acrylates preferably being aliphatic mono-, bi- or trifunctional urethane acrylates.

3. The process as claimed in claim 1 or 2, **characterized in that** the formulation encompasses reactive diluents, preferably monomers, particularly preferably acrylates, the acrylates preferably being monofunctional acrylates from the group consisting of butyl acrylate, 2-ethylhexyl acrylate, hydroxyethyl acrylate, hydroxypropyl acrylate, 4-hydroxybutyl acrylate, ethyl diglycol acrylate, isodecyl acrylate and 2-ethoxyethyl acrylate, and the bifunctional acrylates being from the group consisting of diethylene glycol diacrylate, dipropylene glycol diacrylate, triethylene glycol diacrylate, tripropylene glycol diacrylate and 1,6-hexanediol diacrylate, and the trifunctional acrylates being from the group consisting of trimethylolpropane triacrylate and pentaerythritol triacrylate, and particular preference being given to 2-ethoxyethyl acrylate, isodecyl acrylate, 1,6-hexanediol diacrylate and trimethylolpropane triacrylate.

4. The process as claimed in any of claims 1 to 3, **characterized in that** the radiation curing takes place by way of an electron beam.

5. The process as claimed in any of claims 1 to 3, **characterized in that** the radiation curing takes place by way of UV radiation, and the formulation preferably also encompasses at least one photoinitiator.

6. The process as claimed in claim 5, **characterized in that** the photoinitiator is selected from the group consisting of α-hydroxyketones, α-aminoketones, dimethylketals of benzil, bis-benzoylphenylphosphine oxides, metallocenes, and derivatives of these, and is preferably 2-hydroxy-2-methyl-1-phenylpropan-1-one.

7. The process as claimed in any of claims 1 to 6, **characterized in that** the molding, casting or compression molding takes place in a gap (16) between a shaping roll (11) and a backing roll (12), and that the shaping roll (11) has a large number of radial cutouts (17), where the interlocking means (24) or the protruding elements are formed during passage through the gap (16).

8. The process as claimed in claim 7, **characterized in that** the viscosity of the formulation at 25°C is from 150 to 20.000 mPa.s, preferably from 300 to 5.000 mPa.s.

## Revendications

1. Procédé pour la fabrication de pièces d'attaches adhésives présentant un grand nombre de moyens d'attache (24), **caractérisé en ce qu'**on moule, coule et/ou comprime, sous forme d'un grand nombre de moyens d'attache (24) conjointement avec un corps de base (21) d'une attache adhésive, une formulation contenant un prépolymère réticulable par rayonnement et on la durcit ensuite par rayonnement.

2. Procédé selon la revendication 1, **caractérisé en ce que** les prépolymères réticulables par rayonnement, en particulier acrylés, sont choisis dans le groupe constitué par les poly(acrylates d'ester), les époxyacrylates, les polyétheracrylates, les acrylates de silicone ou les acrylates d'uréthane, les acrylates d'uréthane étant de préférence des acrylates d'uréthane aliphatiques monofonctionnels, difonctionnels ou trifonctionnels.

3. Procédé selon l'une quelconque des revendications 1 ou 2, **caractérisé en ce que** la formulation comprend des diluants réactifs, de préférence des monomères, de manière particulièrement préférée des acrylates, les acrylates étant de préférence des acrylates monofonctionnels du groupe constitué par l'acrylate de butyle, l'acrylate de 2-éthylhexyle, l'acrylate d'hydroxyéthyle, l'acrylate d'hydroxypropyle, l'acrylate de 4-hydroxybutyle, l'acrylate d'éthyldiglycol, l'acrylate d'isodécyle et l'acrylate de 2-éthoxyéthyle, des acrylates difonctionnels du groupe constitué par le diacrylate de diéthylèneglycol, le diacrylate de dipropylèneglycol, le diacrylate de triéthylèneglycol, le diacrylate de tripropylèneglycol et le diacrylate de 1,6-hexanediol et des acrylates trifonctionnels du groupe constitué par le triacrylate de triméthylolpropane ou le triacrylate de pentaérythritol, l'acrylate de 2-éthoxyéthyle, l'acrylate d'isodécyle, le diacrylate de 1,6-hexanediol et le triacrylate de triméthylolpropane étant particulièrement préférés.

4. Procédé selon l'une quelconque des revendications 1 à 3, **caractérisé en ce que** le durcissement par rayonnement est réalisé au moyen d'un rayonnement électronique.

5. Procédé selon l'une quelconque des revendications 1 à 3, **caractérisé en ce que** le durcissement par rayonnement est réalisé au moyen de rayons UV et la formulation comprend de préférence, en plus, au moins un photo-initiateur.

6. Procédé selon la revendication 5, **caractérisé en ce que** le photo-initiateur est choisi dans le groupe constitué par les α-hydroxycétones, les α-aminocétones, les benzyldiméthylcétals, les phénylphoshinoxydes de bisbenzoyle, les métallocènes et leurs dérivés et est de préférence la 2-hydroxy-2-méthyl-1-phénylpropan-1-one.

7. Procédé selon l'une quelconque des revendications 1 à 6, **caractérisé en ce que** le moulage, la coulée ou la compression est réalisé dans une fente (16) entre le cylindre de moulage (11) et un cylindre de contre-pression (12) et le cylindre de moulage (11) présente une multitude d'évidements (17) s'étendant radialement, les moyens d'attache (24) ou les éléments en saillie étant formés en passant dans la fente (16).

8. Procédé selon la revendication 7, **caractérisé en ce que** la viscosité de la formulation à 25°C est de 150 à 20000 mPa.s, de préférence de 300 à 5000 mPa.s.
